(19) Europäisches Patentamt
European Patent Office
Office européen des brevets

(11) **EP 1 809 151 B1**

(12) **FASCICULE DE BREVET EUROPEEN**

(45) Date de publication et mention
de la délivrance du brevet:
**10.09.2008 Bulletin 2008/37**

(21) Numéro de dépôt: **05782895.6**

(22) Date de dépôt: **09.09.2005**

(51) Int Cl.:
**A47J 31/54** *(2006.01)* **F24H 1/10** *(2006.01)*

(86) Numéro de dépôt international:
**PCT/EP2005/009689**

(87) Numéro de publication internationale:
**WO 2006/029763 (23.03.2006 Gazette 2006/12)**

(54) **DISPOSITIF DE CHAUFFAGE D'UN LIQUIDE ET PROCEDE POUR CHAUFFER UN LIQUIDE**

VORRICHTUNG UND VERFAHREN ZUM ERHITZEN EINER FLÜSSIGKEIT

DEVICE AND METHOD FOR HEATING A LIQUID

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **13.09.2004 EP 04021674**

(43) Date de publication de la demande:
**25.07.2007 Bulletin 2007/30**

(60) Demande divisionnaire:
**07124079.0 / 1 913 851**

(73) Titulaire: **Nestec S.A.
1800 Vevey (CH)**

(72) Inventeurs:
• **BOUSSEMART, Christophe
F-74500 Lugrin (FR)**
• **PULZER, Jean-Bernard
CH-2123 Saint-Sulpice (CH)**

(74) Mandataire: **Schnyder, Frank Simon et al
Avenue Nestlé 55
1800 Vevey (CH)**

(56) Documents cités:
**EP-A1- 1 380 243** **GB-A- 2 152 012**
**US-B1- 6 246 831** **US-B1- 6 459 854**

## Description

La présente invention concerne un dispositif de chauffage d'un fluide destiné à équiper une machine pour la préparation de boissons chaudes.

La présente invention concerne également un procédé pour chauffer rapidement et précisément un liquide.

On connaît déjà du brevet EP 1 380 243 un dispositif de chauffage destiné notamment à équiper des machines à café. Ce dispositif de chauffage comprend un tube métallique dans lequel peut circuler le liquide à chauffer à partir d'un canal d'entrée vers un canal de sortie. La surface extérieure du tube est recouverte sur plusieurs sections de sa longueur d'une pluralité de jeux de résistances électriques en série. Un insert cylindrique s'étend dans le tube pour former, avec la paroi intérieure du tube, un canal hélicoïdal pour la circulation du liquide et ainsi favoriser une circulation turbulente et un transfert d'énergie rapide du tube au liquide. Un débitmètre est par ailleurs disposé en amont du canal l'entrée. Le dispositif comprend en outre une pluralité de capteurs de température répartis sur le tube à l'entrée et à la sortie de chaque jeu de résistances. Le principe de distribution de l'énergie de chauffage au liquide est ici basé sur la modulation de la puissance électrique développée par les résistances qui peuvent être commutées indépendamment les unes des autres ou en série en fonction de la température de l'eau à l'entrée du canal.

Bien que ce dispositif donne des résultats satisfaisants en termes de rapidité de chauffage, ce dispositif est relativement encombrant en ce que le volume d'eau à chauffer détermine la hauteur du tube, et il est onéreux en ce qu'il nécessite l'impression de résistances sous forme de films épais à la surface du tube (appelés couramment "thick films").

En outre, la précision de la régulation de la température du liquide est limitée par le fait que le liquide ne vient pas directement en contact avec les capteurs qui sont disposés à l'extérieur du tube. La vitesse de réponse à des différences de températures, due à l'inertie du liquide à chauffer, est aussi plus lente, ce qui nuit à la précision de la régulation de la température. A noter également que la proximité des capteurs de température des jeux de résistances risque d'influencer la mesure de manière non contrôlable en raison de la conduction thermique qui se produit au travers de la paroi du tube.

Dans le domaine des machines à café les débits d'eau à chauffer pour préparer un café sont relativement faibles typiquement de l'ordre de quelques dizaines de ml/min. Or, les débitmètres disponibles sur le marché sont peu précis pour la mesure de débits inférieurs à 200ml/min. Les incertitudes de mesures du débit dans cette application constituent donc un problème supplémentaire pour le calcul précis de l'énergie à fournir pour atteindre la température de consigne en sortie du dispositif. Dans le brevet EP 1 380 243, les imprécisions dues au débit-mètre ne sont donc pas corrigées avant que le fluide ne quitte le dispositif de chauffage puisque seule la température d'entrée est prise en compte dans le calcul de la quantité d'énergie à fournir au dispositif.

De plus, ce document est silencieux sur les réalisations pratiques permettant l'agencement des capteurs de température à la surface du tube, un tel agencement paraissant en tout état de cause délicat en raison de la technologie proposée pour réaliser les jeux de résistances.

Le brevet US 6 246 831 se rapporte à un système de contrôle de chauffage de fluide pour le chauffage domestique ou une citerne individuelle comprenant plusieurs chambres de chauffe contenant des éléments chauffants électriques en continu. La régulation de température se base sur des capteurs de températures dans chaque chambre et en déterminant une déviation entre une température de consigne et la somme des températures mesurées dans chaque chambre. Une commande répond ensuite rapidement aux changements de température et modifie le calcul de puissance en agissant sur la modulation de puissance. Une telle méthode ne tient toutefois pas compte de variations instantanées de la quantité réelle de fluide circulant dans le dispositif; cette quantité étant basée sur une méthode de calcul indirecte. Ainsi des changements soudains des conditions opérationnelles peuvent rendre ce calcul inefficace, ce qui rend le système adapté essentiellement à des conditions d'écoulement stables mais inadapté pour la production d'eau chaude dans une machine à café enregistrant des brusques variations de débit.

La présente invention a donc pour but de remédier aux inconvénients susmentionnés ainsi qu'à d'autres encore en fournissant un dispositif de chauffage d'un liquide mettant en oeuvre des moyens simples, compacts et peu coûteux.

La présente invention a également pour but de fournir un tel dispositif de chauffage permettant de chauffer instantanément un liquide, avec un préchauffage du système de chauffe réduit et sans stockage d'énergie thermique préalable et latente, à une température de sortie donnée, comprise entre la température d'entrée et 100°C, d'améliorer la précision en ce qui concerne la température de sortie du liquide, ainsi que fournir l'énergie nécessaire et suffisante pour le chauffage du liquide à ladite température de consigne.

A cet effet, la présente invention concerne un dispositif de chauffage d'un liquide en liquide chaud ou en vapeur, notamment pour des applications ménagères et plus particulièrement pour la préparation de boissons chaudes comprenant un corps muni d'un canal pour la circulation d'un liquide, ledit canal ayant une entrée de liquide et une sortie de liquide et étant associé à au moins un corps de chauffe électrique dont l'alimentation est commandée par des moyens de commutation reliés à des moyens de commande; ledit canal comprenant au moins des première et deuxième portions de canal reliées entre elles par une troisième portion de canal formant un conduit de liaison; lesdites au moins première et deuxième portions de canal étant associées chacune à au moins un corps de chauffe. Le conduit de liaison est associé à un capteur de température intermédiaire relié auxdits moyens de commande; ledit capteur de température intermédiaire étant arrangé pour venir en contact direct ou indirect avec le liquide circulant dans ledit conduit pour mesurer la température du liquide. Le dispositif se caractérise en ce qu'il comprend un débit-mètre qui mesure la quantité de liquide traversant ledit canal et en ce que les moyens de commande et de commutation sont configurés pour commander le corps de chauffe de ladite au moins seconde portion de canal en fonction de la quantité d'énergie utile à apporter dans ladite seconde portion de canal pour amener la température intermédiaire mesurée par ledit capteur de température intermédiaire jusqu'à une température de consigne; ladite quantité d'énergie étant calculée par le moyen de commande en fonction de la quantité de liquide mesurée par le débit-mètre, de la température intermédiaire mesurée et de la température de consigne en sortie du dispositif, cette quantité d'énergie étant distribuée audit corps de chauffe de ladite au moins seconde portion de canal par les moyens de commande et de commutation à intervalles de temps déterminés.

Selon un mode de réalisation, préféré, les intervalles de temps déterminés sont inférieurs à 500 millisecondes. On notera à ce propos que lorsqu'un débit-mètre à impulsions est utilisé, l'intervalle de temps sera ajusté sur la fréquence des impulsions du débit-mètre à impulsions.

L'invention apporte donc une meilleure précision dans la régulation en température, donc une meilleure utilisation de l'énergie consommée, du fait que, d'une part que l'on mesure la température du liquide à chauffer de manière directe, et d'autre part, que l'énergie de chauffage calculée et distribuée tient compte des variations instantanées de débit.

Selon des caractéristiques avantageuses, le dispositif de l'invention comprend en outre un capteur de température d'entrée de liquide arrangé pour venir en contact direct ou indirect avec le liquide à l'entrée du dispositif pour mesurer la température du liquide, et un débitmètre disposé, par exemple, en amont de l'entrée de la première chambre. Des moyens de régulation sont également prévus pour calculer un facteur de correction de la puissance à affecter au corps de chauffe de ladite seconde portion de canal en fonction des températures d'entrée et intermédiaire mesurées, du débit mesuré par le débitmètre et du bilan d'énergie.

De manière préférentielle, les moyens de commande et de commutation sont aussi configurés pour commander le corps de chauffe de ladite première portion de canal en fonction de la quantité d'énergie théorique utile à apporter dans ladite première portion de canal pour amener la quantité de fluide de la température d'entrée mesurée par le capteur d'entrée jusqu'à une température de consigne intermédiaire.

En pratique, pour distribuer une quantité d'énergie théorique appropriée au corps de chauffe de la première portion de canal, on mesure la température du liquide à chauffer en entrée du dispositif, au moyen d'un capteur au contact direct ou indirect du fluide à mesurer, et on détermine la quantité d'énergie à fournir en fonction de la quantité de liquide à chauffer (déterminée par le débitmètre) pour atteindre une température intermédiaire de consigne selon la formule E = Quantité de liquide à chauffer x (T intermédiaire de consigne - T entrée mesurée) x Capacité calorifique du liquide.

Pour distribuer une quantité d'énergie théorique appropriée au corps de chauffe de la deuxième portion de canal, on calcule la quantité d'énergie selon le formule E = Quantité de liquide à chauffer mesurée par le débit-mètre x (Température de sortie désirée - Température intermédiaire mesurée) x Capacité calorifique du liquide.

Toutefois, pour tenir compte des éventuelles erreurs et imprécisions comme sur la mesure du débit, les tolérances sur la puissance des résistances, la tension du réseau, ou autres, il est préférable d'appliquer un facteur de correction calculé selon la formule:

$$k = (T \text{ intermédiaire mesurée} - T \text{ entrée mesurée})/(T \text{ intermédiaire de consigne} - T \text{ entrée mesurée}).$$

Le facteur de correction est ensuite appliqué par les moyens de commande pour ajuster la valeur de quantité d'énergie nécessaire à chauffer le liquide dans la seconde chambre afin d'obtenir la température la plus proche de la température désirée en sortie du bloc chauffant.

Ces calculs de bilans énergétiques corrigés et la distribution des quantités d'énergie ainsi calculées aux corps de chauffe sont mis en oeuvre à intervalles brefs et répétés pour tenir compte des variations de débit enregistrées par le débit-mètre.

De préférence, le calcul se fait à intervalles réguliers de 30 ms environ. La quantité d'énergie de chauffage ainsi déterminée par ce calcul est alors distribuée à chaque impulsion du débit-mètre (pour un débit-mètre fonctionnant sur un mode à impulsions) soit, typiquement, toutes les 10 à 100 ms environ, de préférence toutes les 10 à 30 ms. On apporte ainsi une réponse rapide du chauffage à des variations brusques de débit.

La structure du dispositif de la présente invention permet donc avantageusement de déterminer précisément la différence entre la température intermédiaire de consigne et la température intermédiaire mesurée et donc de calculer un facteur de correction pour déterminer précisément la quantité d'énergie à fournir au liquide dans la ou les portions de canal suivantes pour amener le liquide de la température intermédiaire mesurée à la température de sortie de consigne.

Le dispositif de l'invention permet ainsi de compenser les erreurs et corriger les imprécisions et tolérances provenant des éléments de mesure et ceux pour la production de l'énergie de chauffage en particulier les erreurs de mesure du débit-mètre, les tolérances sur la puissance des résistances, la tension du réseau et autres.

Afin de corriger ces erreurs sur la seconde portion de canal; en particulier, les tolérances sur la puissance des résistances, la tension du réseau, et autres imprécisions, on peut donc mesurer la température de sortie et selon les mêmes calculs de bilans d'énergie calculer un nouveau facteur de correction applicable à cette seconde portion de canal. Ce second facteur de correction s'appliquera sur la quantité d'énergie à appliquer au prochain calcul.

Pour compenser aussi les fluctuations de la tension du réseau par rapport à une valeur nominale, le dispositif mesure régulièrement la tension et/ou le courant du réseau et calcule un facteur de correction représentatif de la variation de la tension et/ou du courant et affecte ce facteur de correction au calcul de la quantité d'énergie à fournir aux corps de chauffe, pour ajuster le temps d'enclenchement des résistances en fonction de ces variations.

Selon un mode de réalisation préféré de l'invention, les portions de canal associées respectivement à au moins un corps de chauffe forment chacune des chambres reliées entre elles par un conduit de liaison, lequel présente une section inférieure à celle des chambres, un ou plusieurs corps de chauffe étant immergés dans chacune des chambres.

Selon des caractéristiques avantageuses, chaque corps de chauffe comprend au moins une résistance, chaque résistance de chaque corps de chauffe étant commutable indépendamment. De cette façon, les ajustements de températures peuvent être plus rapidement réalisés et avec une plus grande précision de température en sortie. On évite aussi les problèmes liés aux brusques augmentations ou chutes de tension (effet de "scintillement").

Selon un premier mode de réalisation, les corps de chauffe sont au nombre de deux, chacun étant logé dans une chambre séparée et comprenant chacun deux résistances, chaque résistance des deux corps de chauffe étant configurée pour être commutée indépendamment l'une de l'autre par les moyens de commutation.

Selon un deuxième mode de réalisation, les corps de chauffe sont au nombre de quatre, chacun étant logé dans une chambre séparée et comprenant une résistance, chaque résistance étant configurée pour être commutée indépendamment par les moyens de commutation. Dans ce mode de réalisation, le capteur de température intermédiaire est disposé en aval de la chambre communiquant avec l'entrée de liquide et en amont de la chambre communiquant avec la sortie de liquide.

La structure du dispositif selon l'invention permet ainsi d'utiliser des corps de chauffe ayant la forme de cartouches chauffantes qui sont commercialement disponibles et particulièrement économiques en comparaison avec les jeux de résistances imprimées de l'art antérieur.

L'utilisation d'une pluralité de cartouches de ce type, ayant une puissance nominale inférieure à 450W, de préférence, inférieure ou égale à 400W, sous 230V permet avantageusement, par une commutation successive et non simultanée des différentes cartouches disposées dans le canal, à une certaine fréquence, de préférence de l'ordre de 10 ms, de répartir la charge électrique sur le réseau et ainsi de limiter les risques de brusques sauts de tension provoquant les phénomènes de scintillement. De plus, l'utilisation de ce type de cartouche chauffante permet de réaliser un dispositif à faible inertie thermique ce qui rend possible la distribution successive de liquides à des températures de sortie différentes, par exemple déterminées en fonction de la nature de la boisson à préparer, à des intervalles de temps rapprochés. En particulier, le dispositif de l'invention peut servir à optimiser des températures variables du liquide dans une machine de préparation de boissons chaudes, comme il est décrit dans la demande de brevet pendante américaine, US No. 10/983,671 déposée le 9 novembre 2004 intitulée "Méthode et dispositif pour optimiser les températures variables d'un liquide". Le contenu entier de cette demande est incorporé ici par référence.

L'invention se rapporte aussi à un procédé pour chauffer rapidement et précisément un liquide notamment pour des applications ménagères et plus particulièrement pour la préparation de café ou autres boissons chaudes. Le procédé comprend un dispositif de chauffage comprenant un corps muni d'un canal pour la circulation du liquide, au moins un premier corps de chauffe associé à une première portion de canal, au moins un second corps de chauffe associé à une seconde portion de canal. Selon le procédé de l'invention:

    a) la quantité de liquide à chauffer est mesurée par un débitmètre,

    b) la température intermédiaire est mesurée par un capteur de température intermédiaire placé au contact direct ou indirect du liquide entre le premier et second corps de chauffe,

    c) la quantité d'énergie théorique à fournir par le second corps de chauffe est calculée par le moyen de commande en fonction de la quantité de liquide à chauffer mesurée, de la température intermédiaire mesurée, de la température de consigne en sortie du dispositif et de la capacité calorifique du liquide,

    d) cette quantité d'énergie calculée est appliquée par le moyen de commutation aux second corps de chauffe, par commutation sélective des corps de chauffe, pour amener le liquide jusqu'à la (ou tout au moins au plus près de la) température de consigne désirée en sortie du dispositif,

    e) au moins plusieurs des étapes a) à d) sont répétées par le moyen de commande à intervalles de temps déterminés.

Selon un mode de réalisation préféré du procédé, au moins plusieurs des étapes a) à d) sont répétées à des intervalles de temps inférieurs à 500 millisecondes. L'intervalle de temps sera ajusté pour la distribution de la quantité d'énergie à l'étape d) sur la fréquence des impulsions du débit-mètre à impulsions ou, tout au moins, à une fréquence déterminée de l'ordre de une à quelques dizaines de millisecondes pour un autre type de débit-mètre.

Un tel procédé permet d'obtenir une précision améliorée de la température en sortie désirée du liquide, en particulier, grâce à la mesure réelle des températures du liquide (et non pas celles du corps de chauffe comme dans l'art antérieur) et par une détermination des quantités d'énergie fournies, qui tient compte des variations réelles du débit du liquide dans le dispositif.

Selon un mode de réalisation préféré du procédé de l'invention, les quantités d'énergie à appliquer à la fois aux premier et second corps de chauffe sont calculées en fonction des variables de températures mesurées et de la mesure du débit-mètre.

Le procédé comprend alors les étapes suivantes :

f) la température du liquide à l'entrée du dispositif est mesurée par un capteur de température d'entrée du liquide placé au contact direct ou indirect du liquide,

g) la quantité de liquide à chauffer est mesurée par un débitmètre,

h) la quantité d'énergie théorique à fournir par le premier corps de chauffe est calculée par un moyen de commande en fonction de la quantité de liquide mesurée, de la température mesurée à l'entrée du dispositif, d'une température intermédiaire de consigne et de la capacité calorifique du liquide,

i) la température intermédiaire est mesurée par un capteur de température intermédiaire placé au contact direct ou indirect du liquide entre le premier et second corps de chauffe,

j) la quantité d'énergie théorique à fournir par le second corps de chauffe est calculée par le moyen de commande en fonction de la quantité de liquide à chauffer mesurée, de la température intermédiaire mesurée, de la température de consigne en sortie du dispositif et de la capacité calorifique du liquide,

k) ces quantités d'énergie calculées sont appliquées par le moyen de commutation, respectivement, aux premier et second corps de chauffe, par commutation sélective des corps de chauffe, pour amener le liquide jusqu'à la (ou tout au moins au plus près de la) température de consigne désirée en sortie du dispositif,

l) au moins plusieurs des étapes f) à k) sont répétées par le moyen de commande à intervalles de temps déterminés.

Selon un mode préférentiel, le procédé prend en compte les erreurs et imprécisions globales pouvant provenir de différents composants du dispositif (par exemple, débit-mètre, résistances, etc.) ou de la tension du réseau de façon à affiner la quantité d'énergie fournie, notamment, au second corps de chauffe, et obtenir ainsi, une précision de chauffage améliorée. Pour cela, on calcule un facteur de correction selon la formule:

$$k = \text{(Température intermédiaire mesurée – Température d'entrée mesurée)/(Température intermédiaire de consigne – Température d'entrée mesurée)},$$

et

l'on applique ce facteur de correction pour calculer la quantité d'énergie à fournir par le second corps de chauffe.

Le procédé de l'invention est bien entendu appliqué en boucle, à des intervalles de temps rapprochés (de l'ordre de quelques millisecondes, par exemple, toutes les 30 ms pour ce qui est du calcul et toutes les 10 ms pour ce qui est de la distribution d'énergie aux corps de chauffe) pendant le passage du liquide au travers du dispositif de chauffage; notamment, par des moyens de régulation tels qu'un microcontrôleur ou autres moyens de régulation électroniques équivalents.

Selon un aspect de l'invention, la température du liquide est mesurée par des capteurs qui sont en contact direct ou indirect avec le liquide. Un contact "direct" s'entend d'une mesure utilisant un capteur plongé dans le liquide. Il peut s'agir, par exemple d'une sonde NTC protégée par un verre ou une céramique. Un contact "indirect" s'entend d'une mesure utilisant un capteur (telle qu'une sonde fine NTC) fixé par exemple par collage du côté sec d'un conduit non-chauffant dans ou contre lequel circule le liquide, tel qu'un tube métallique. Dans tous les cas, le liquide sépare le capteur par rapport au corps de chauffe proprement dit de façon à ce que la température mesurée soit la température du liquide et non pas une température affectée par la conduction du corps de chauffe contre une surface solide conductrice thermiquement.

Un mode de réalisation concerne un dispositif de chauffage lequel comprend en outre une électrovanne raccordée audit conduit entre la sortie de fluide et ledit dispositif utilisateur et qui est commandée par lesdits moyens de commande, et en ce que lesdits moyens de commande sont agencés pour commander l'électrovanne de façon à diriger le fluide provenant de la sortie de fluide vers un bac de drainage ou une boucle de recirculation, lorsque la température mesurée par ledit capteur n'a pas encore atteint la température de consigne et vers le dispositif utilisateur lorsque la température mesurée a atteint la température de consigne.

La température de consigne peut être une température intermédiaire théorique du dispositif lorsque ledit capteur de température est disposé de manière à mesurer une température intermédiaire dans ledit canal. Dans une variante, la température de consigne est la température en sortie souhaitée lorsque le capteur de température est disposé à la sortie du canal de manière à mesurer la température du fluide à la sortie du dispositif.

Grâce à ces caractéristiques on s'assure que le fluide à destination du dispositif utilisateur, typiquement une unité d'extraction d'une substance par exemple du café ou une buse d'éjection de vapeur, arrive toujours dans ce dispositif à une température suffisante même lorsque le dispositif est utilisé dans la journée pour la première fois. Compte tenu de la faible inertie thermique du dispositif, la période de dérivation dans le bac de drainage, est en général de l'ordre de quelques secondes seulement (Typiquement, de 3-6 secondes). Cet arrangement permet donc de préparer rapidement des boissons de qualité constante indépendamment d'éventuelles fluctuations au niveau du dispositif de chauffage.

D'autres caractéristiques et avantages de la présente invention ressortiront plus clairement de la description détaillée qui suit de modes de réalisation du dispositif de chauffage selon l'invention, donnés à titre purement illustratif et non limitatif, en liaison avec les dessins annexés sur lesquels :

- la figure 1 est une vue en perspective partiellement arrachée d'un dispositif de chauffage d'un liquide selon un premier mode de réalisation de l'invention ;
- la figure 2 est une vue schématique d'une machine à café comprenant le dispositif de chauffage de la figure 1, le dispositif de chauffage étant représenté en coupe ;
- la figure 3 est une vue en perspective d'un dispositif de chauffage d'un liquide selon un deuxième mode de réalisation de l'invention ;
- la figure 4 est une vue schématique d'une machine à café comprenant le dispositif de chauffage de la figure 3, le dispositif de chauffage étant représenté en coupe et
- la figure 5 est une vue similaire à la figure 4 illustrant un autre aspect de l'invention

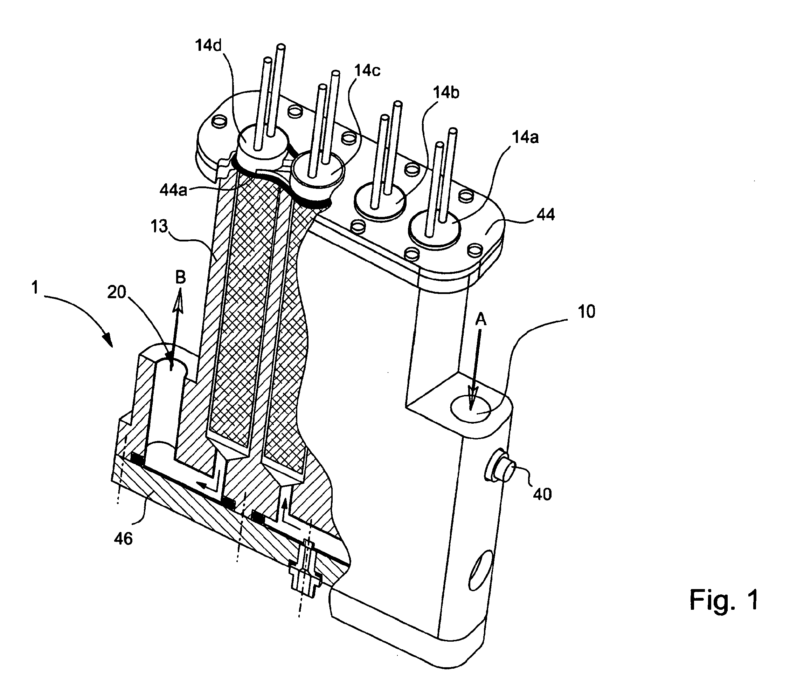

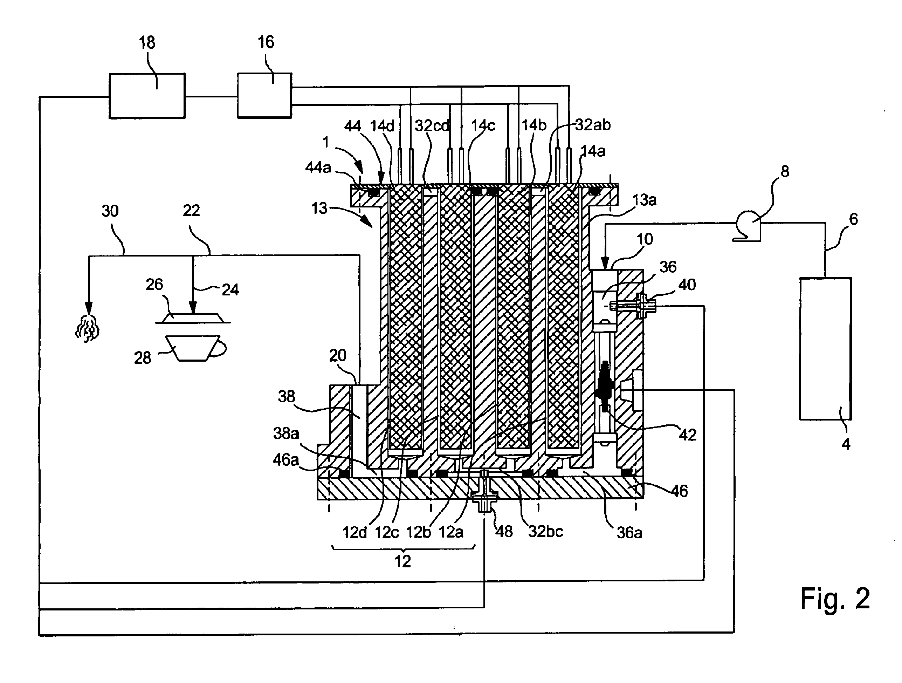

En se référant aux figures 1 et 2, on voit illustré à titre d'exemple un dispositif de chauffage d'un liquide selon un premier mode de réalisation désigné par la référence numérique générale 1, intégré dans une machine à café 2 (figure 2) qui peut indifféremment être destinée à un usage ménager ou industriel. A noter que la nature du liquide à chauffer dans le dispositif de chauffage n'est pas critique et que le liquide peut être quelconque par exemple de l'eau, du lait, une boisson chocolatée etc.. Dans l'application du dispositif de chauffage illustré, le liquide à chauffer est de l'eau. La machine à café 2 illustrée à la figure 2 comprend un réservoir d'eau froide 4 relié via une conduite 6 à une pompe 8 qui alimente en eau le dispositif de chauffage 1 via une entrée de liquide 10. L'eau circule à travers un canal 12 prévu dans un corps 13 du dispositif de chauffage 1. Le canal 12 est associé à des corps de chauffe 14a, 14b, 14c et 14d, dont l'alimentation électrique est commandée par des moyens de commutation 16 reliés à des moyens de commande 18. Les corps de chauffe sont ainsi immergés dans le liquide à chauffer et en contact direct avec celui-ci. L'eau sort du dispositif de chauffage via une sortie de liquide 20 puis circule à travers un conduit 22 pour arriver à travers un conduit 24 sur une cartouche 26 contenant une substance destinée à former une boisson telle que du café à partir de café torréfié et moulu ou de café soluble, du thé, du chocolat ou autres boissons chaudes. La cartouche 26 est, par exemple, une cartouche scellée qui s'ouvre sous la pression du liquide conformément à ce qui est décrit dans le brevet européen No 512 468. Le café coule ensuite dans une tasse 28. La machine permet également de produire de la vapeur via un conduit 30 relié au conduit 22. A la figure 1, la direction de circulation d'eau à travers le dispositif de chauffage est indiquée par les flèches A et B.

Dans le dispositif de chauffage 1 selon le premier mode de réalisation de l'invention, le canal 12 comprend quatre portions de canal 12a, 12b, 12c et 12d, reliées successivement entre elles par trois conduits de liaison 32ab, 32bc et 32cd. Les portions de canal 12a, 12b, 12c et 12d définissent chacune une chambre qui reçoit un corps de chauffe14a, 14b, 14c et 14d. On notera à ce propos que les conduits de liaison 32ab, 32bc et 32cd présentent des sections transversales inférieures à celles des chambres 12a, 12b, 12c et 12d. Les chambres 12a, 12b, 12c et 12d sont arrangées parallèles entre elles et juxtaposées dans un bloc 13a que comprend le corps 13. Les chambres 12a, 12b, 12c et 12d débouchent toutes sur un premier côté du bloc 13a à une première de leurs extrémités par laquelle les corps de chauffe 14a, 14b, 14c et 14d sont introduits dans les chambres12a, 12b, 12c et 12d. Les deuxièmes extrémités des chambres 12a, 12b, 12c et 12d débouchent sur un deuxième côté du bloc 13a opposé au premier et les chambres 12a, 12b, 12c et 12d sont reliées entre elles à une de leurs extrémités par les trois conduits de liaison 32ab, 32bc et 32cd. La chambre 12a est reliée d'une part à l'entrée de liquide 10 via un conduit 36 par son extrémité disposée du deuxième côté du bloc 13a et d'autre part à la chambre 12b via le conduit de liaison 32ab par son extrémité disposée du premier côté du bloc 13a. La chambre 12b est reliée à la chambre 12c via le conduit de liaison 32bc par son extrémité disposée du deuxième côté du bloc 13a. La chambre 12c est reliée à la chambre 12d via le conduit de liaison 32cd par son extrémité disposée du premier côté du bloc 13a et la chambre 12d est reliée à la sortie de liquide 20 via un conduit 38 par son extrémité disposée du deuxième côté du bloc 13a.

On notera que chaque corps de chauffe 14a, 14b, 14c et 14d s'étend sensiblement sur toute la longueur de la chambre à laquelle il est associé et présente une forme sensiblement complémentaire à celle de la chambre à laquelle il est associé. Selon une variante avantageuse (non représentée), la surface extérieure des corps de chauffe et/ou la paroi intérieure de la chambre qui lui est associée présente un rainurage hélicoïdal, ce qui permet d'allonger le trajet du liquide pendant lequel il est en contact avec les corps de chauffe et sa vitesse; donc augmenter le coefficient d'échange de chaleur; sans pour cela augmenter l'encombrement du dispositif de chauffage.

Le dispositif de chauffage 1 comprend en outre un capteur de température 40 disposé dans le conduit 36 reliant l'entrée de liquide à l'entrée de la chambre 12a. Ce capteur 40 est arrangé pour venir en contact direct avec le liquide à chauffer et pour mesurer la température du liquide à chauffer à l'entrée du dispositif de chauffage, c'est-à-dire avant qu'il ne soit venu en contact avec un des corps de chauffe du dispositif 1. Un débitmètre 42 est également prévu dans le conduit 36, donc en amont de la chambre 12a.

Comme cela est visible à la figure 2, le corps 13 comprend en outre deux couvercles 44, 46 qui s'étendent respectivement du premier et du deuxième côté du bloc 13a et recouvrent les deux extrémités de chacune des chambres 12a, 12b, 12c et 12d. Le couvercle 44 qui se trouve du premier côté du bloc 13a porte les corps de chauffe 14a, 14b, 14c, et 14d tandis que le couvercle 46 qui se trouve du deuxième côté du bloc 13a porte un capteur de température intermédiaire 48. Le capteur de température intermédiaire 48 est associé au conduit de liaison 32bc et est agencé pour venir en contact direct avec le liquide à chauffer circulant dans le conduit.

Le capteur de température d'entrée 40, le débitmètre et le capteur de température intermédiaire 48 sont reliés aux moyens de commande 18 du dispositif 1.

Le couvercle 44 ferme une première extrémité des chambres 12a, 12b, 12c et 12d et délimite en outre avec le bloc 13a les conduits de liaison 32ab et 32cd. Le couvercle 46 ferme la deuxième extrémité des chambres 12a, 12b, 12c et 12d et délimite le conduit 32bc avec le bloc 13a. Le couvercle 46 délimite en outre un canal 36a reliant le conduit 36 à la chambre 12a ainsi que le canal 38a reliant la chambre 12d au conduit 38. Typiquement, les couvercles 44 et 46 sont fixés sur le bloc 13a au moyens de vis (non représentées) et l'étanchéité est assurée au moyen de joints O ring 44a, 46a interposés entre les couvercles 44, 46 et le bloc 13a.

Les moyens de commande 18 et les moyens de commutation 16 sont configurés pour commander les corps de chauffe 14a, 14b, 14c et 14d. Ces moyens de commande 16 sont particulièrement agencés pour commander les corps de chauffe 14c et 14d disposés respectivement dans les chambres 12c, 12d situées en aval du capteur de température intermédiaire 48 en fonction de la quantité d'énergie utile à apporter dans les chambres 12c et 12d pour amener le liquide à chauffer de la température intermédiaire mesurée par le capteur de température intermédiaire 48 jusqu'à une température de consigne contenue par exemple dans une mémoire des moyens de commande 18.

Les corps de chauffe 14a, 14b, 14c, et 14d comprennent chacun une résistance. Les résistances sont reliées aux moyens de commutation 16 et les moyens de commande 18 sont agencés de manière à pouvoir commuter les résistances indépendamment les unes des autres. Le principe de distribution de l'énergie est basé sur les impulsions données par le débit-mètre (par exemple tous les 100 ms ou moins). A chaque impulsion du débit-mètre correspond une énergie soit un temps de chauffe donné sur les corps de chauffe. Ce système proportionnel permet de réagir à des variations rapides du débit; ce qui peut être le cas au cours du cycle d'extraction d'une capsule, en particulier, au moment du perçage de la capsule. Chaque résistance développe une puissance nominale inférieure à la valeur de puissance théorique de scintillement du réseau, typiquement inférieur à 450W sous 230V. Selon la norme IEC 1000-3-3, la puissance maximale pouvant être commutée sur toute la gamme de fréquences est d'environ 380W. Pour éviter les écarts de puissance en valeur absolue supérieurs à la puissance nominale de chacune des résistances, les moyens de commande 18 sont agencés pour commuter les résistances des corps de chauffe de l'état "en circuit" à l'état "hors circuit" et vice-versa de manière intermittente et non simultanée. La commutation se fait toujours au passage à zéro de la tension pour éviter l'introduction de perturbation dans le réseau électrique.

Les moyens de commande 18 comprennent en outre des moyens de régulation qui sont prévus pour calculer la quantité d'énergie à affecter aux corps de chauffe 14c, 14d disposés dans les portions de canal 12c, 12d situées en aval du capteur de température intermédiaire 48, en fonction des températures d'entrée et intermédiaire mesurées et du débit mesuré par le débitmètre 42. D'autres facteurs peuvent être pris en compte dans le calcul de la quantité d'énergie, notamment la mesure de la tension du réseau (par exemple 230V). La quantité d'énergie peut être corrigée par un facteur de correction basé sur la fluctuation entre la tension réellement mesurée du réseau et la tension nominale théorique. Ce facteur indique si la tension réelle est supérieure ou inférieure à la tension nominale, par exemple, de 230V. Ce facteur est mis à jour lorsque les résistances sont enclenchées afin de tenir aussi compte des chutes de tension dans la ligne d'alimentation.

Les moyens de régulation comprennent généralement un microcontrôleur, de la mémoire et des programmes de calcul des bilans énergétiques et des facteurs de correction à appliquer. Les calculs des bilans énergétiques, des corrections et les commutations des corps de chauffe, par le microcontrôleur se font à intervalles de temps très courts de façon à constamment réguler les quantités d'énergie apportées aux corps de chauffe. Les intervalles pour les calculs des quantités d'énergie sont, de l'ordre de quelques millisecondes, préférablement, de moins de 100 ms, par exemple toutes les 30 ms.

Le mode de régulation automatique est basé sur le principe suivant. Une mesure de température du liquide à l'entrée du dispositif est prise par le capteur de température 40 à l'entrée du dispositif; la quantité de liquide à chauffer est quant à elle prise par un débit-mètre 42 sur la base d'impulsions. Une température intermédiaire entre le premier et second corps de chauffe est aussi mesurée par le capteur de température 48. Dans un mode de réalisation ne comprenant pas de capteur de température à l'entrée de liquide, le système pourra partir d'une température d'entrée théorique, typiquement de la température de l'eau du réseau, mémorisée dans un microcontrôleur.

Ces mesures sont recueillies par le microcontrôleur comprenant un programme de calcul des quantités d'énergie. En particulier, le microcontrôleur calcule ainsi la quantité d'énergie théorique à fournir par le premier corps de chauffe selon la formule:

Quantité d'Energie des premiers corps de chauffe (14a, 14b, 14e) = Quantité de liquide à chauffer mesurée par le débit-mètre x (T intermédiaire de consigne - T entrée mesurée) x Capacité calorifique du liquide. Un facteur de correction basé sur les variations de tension du réseau peut être appliqué à la valeur de quantité finale.

La température intermédiaire de consigne est une valeur déterminée par calcul lors de tests du dispositif et qui correspond à une valeur théorique optimale en fonction de la température mesurée de l'eau à l'entrée, la température de sortie fixée (consigne), un facteur de correction du réseau 230V, les valeurs théoriques des résistances ohmiques des éléments chauffants. Cette valeur varie en fonction de la température de sortie désirée, par exemple, pour la production d'un café ou d'une autre boisson comme du chocolat. Cette valeur est enregistrée dans le programme ou dans une mémoire du microcontrôleur.

Le microcontrôleur calcule aussi la quantité d'énergie théorique à fournir par le second corps de chauffe selon la formule:

Quantité d'énergie pour les seconds corps de chauffe (14c, 14d, 14f) = Quantité de liquide à chauffer mesurée par le débit-mètre x (Température de sortie désirée - Température intermédiaire mesurée) x Capacité calorifique du liquide. Cette quantité d'énergie peut elle aussi être corrigée pour tenir compte de la tension du réseau.

Le microcontrôleur contrôle ensuite la distribution de ces quantités d'énergie calculées, par unité de temps de chauffe, en commandant la commutation on/off des résistances contenues dans les corps de chauffe.

Toutefois, pour tenir compte des éventuelles erreurs et imprécisions comme sur la mesure du débit, les tolérances sur la puissance des résistances, la tension du réseau, ou autres, il est préférable d'appliquer un facteur de correction calculé selon la formule:

$$k = (T\ intermédiaire\ mesurée - T\ entrée\ mesurée)/(T\ intermédiaire\ de\ consigne - T\ entrée\ mesurée).$$

Le facteur de correction est ensuite appliqué par le microcontrôleur pour ajuster la valeur de quantité d'énergie nécessaire à chauffer le liquide dans la seconde chambre afin d'obtenir la température la plus proche de la température désirée en sortie du bloc chauffant.

Ainsi, la correction sur le(s) corps de chauffe est appliquée de la manière suivante:

$$Quantité\ d'énergie\ corrigée\ du\ second\ corps\ de\ chauffe = (2\text{-}k)\ x\ Quantité\ d'énergie\ théorique\ du\ second\ corps\ de\ chauffe,$$

soit encore:

Quantité d'énergie corrigée = (2-K) x Capacité calorifique du liquide x Quantité de liquide à chauffer x (Température de sortie désirée - Température intermédiaire mesurée). Cette quantité d'énergie peut elle aussi être corrigée pour tenir compte de la tension du réseau.

Ainsi lorsque le facteur de correction est inférieur à 1; cela signifie que la quantité d'énergie réelle distribuée par le(s) corps de chauffe en amont de la sonde de température intermédiaire est trop faible et il faut donc appliquer une correction par augmentation de la quantité d'énergie distribuée par le(s) corps de chauffe situés en aval de la sonde de température intermédiaire. Lorsque le facteur est supérieur à 1, cela signifie que la quantité d'énergie réelle distribuée par le(s) corps de chauffe en amont de la sonde de température intermédiaire est trop élevée; et il faut alors appliquer une correction en diminuant la quantité d'énergie distribuée par le(s) corps de chauffe situés en aval de cette sonde. Par exemple, si le facteur de correction est calculé à une valeur de 1.10; cela signifie que la quantité d'énergie distribuée par le(s) premier(s) de chauffe est 10% trop élevée et il faudra alors appliquer une réduction de la quantité d'énergie aux second(s) corps de chauffe de 10% pour obtenir une température de sortie se rapprochant au plus près de la température désirée.

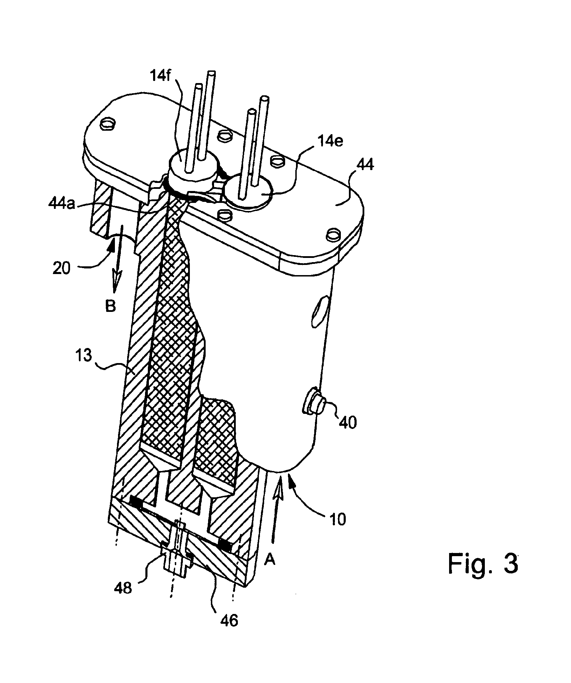

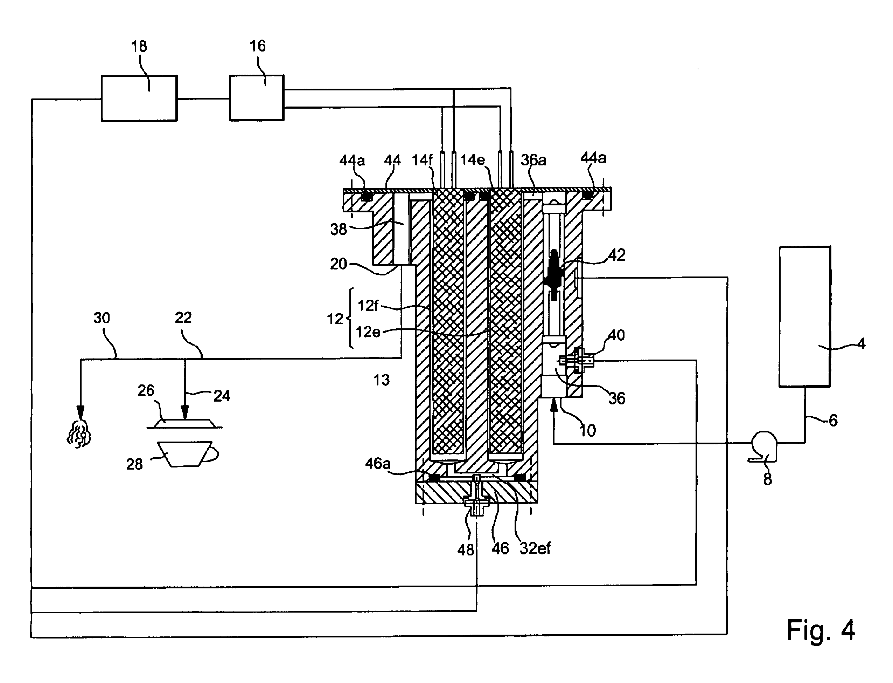

Aux figures 3 et 4 est représenté un dispositif de chauffage d'un liquide selon un deuxième mode de réalisation de l'invention dans lequel les éléments identiques à ceux décrits en liaison avec les figures 1 et 2 sont désignés par les mêmes références numériques.

Ce dispositif de chauffage ne se distingue de celui décrit précédemment qu'en ce que le canal 12 prévu dans le corps 13 et à travers lequel circule le liquide à chauffer ne comprend que deux portions de canal 12e et 12f reliées entre elles par un conduit de liaison 32ef auquel est associé le capteur de température intermédiaire 48 et qu'en ce que les corps de chauffe 14e et 14f associés respectivement aux portions de canal 12e et 12f comprennent chacun deux résistances, chacune d'elles étant reliée aux moyens de commande 18 via les moyens de commutation 16.

De même que dans le premier mode de réalisation, les résistances électriques des corps de chauffe 14e et 14f développent chacune une puissance nominale inférieure à la valeur de puissance théorique de scintillement du réseau typiquement inférieure à 450W sous 230V et les moyens de commande 18 sont agencés pour commuter ces résistances de l'état "en circuit" à l'état "hors circuit" et vice-versa de manière intermittente typiquement à une fréquence de l'ordre de 10 ms. Des corps de chauffe de ce type sont par exemple de cartouches chauffantes dites "haute charge" ou "haute densité"; c'est à dire développant une puissante importante par unité de surface de chauffe.

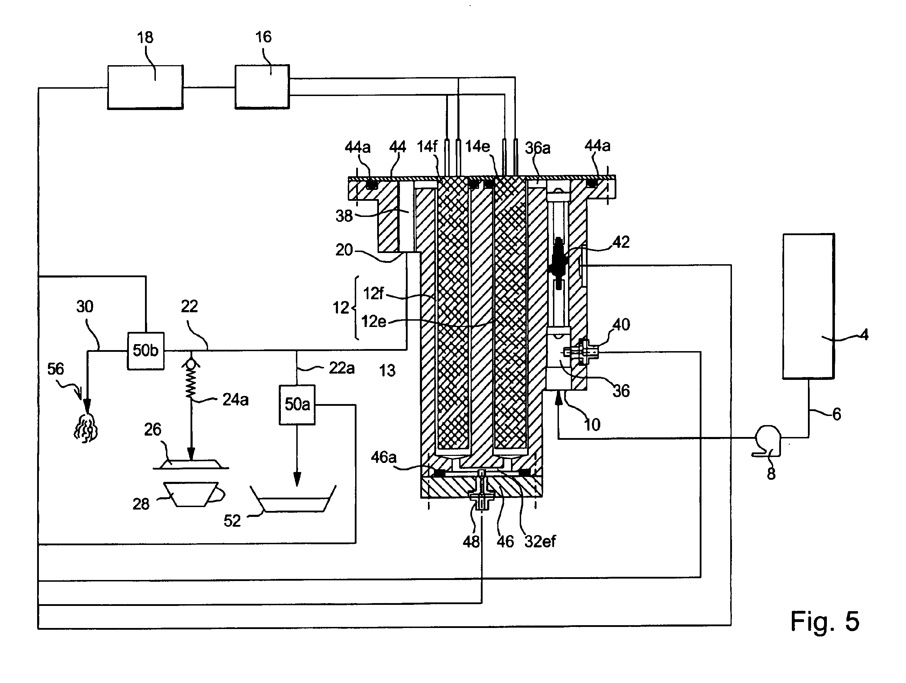

A la figure 5 est représentée schématiquement une machine à café incorporant un autre aspect de l'invention. Dans cette figure, les éléments identiques à ceux décrits en liaison avec la figure 4 sont désignés par les mêmes références numériques.

Cette machine à café ne se distingue de celle décrite précédemment qu'en ce qu'elle comprend un dispositif permettant d'assurer la délivrance d'un "premier" liquide ou d'une "première" vapeur à la température adéquate. Pour cela, le dispositif comprend un premier conduit principal 22 relié au dispositif d'extraction 26. Une valve de contre-pression 24a du conduit 24 est disposé à l'entrée du dispositif 26. Une première électrovanne 50a est reliée à une portion de conduit 22a conduisant à un bac de draînage 52. Une deuxième électrovanne dite "vapeur" 50b est raccordée au conduit 30 disposé entre le premier dispositif utilisateur et le deuxième dispositif utilisateur formé dans l'exemple par une buse d'éjection de vapeur 56. Les électrovannes 50a, 50b sont commandées par les moyens de commande 18. Ces derniers sont agencés pour commander respectivement les électrovannes 50a, 50b de façon à diriger le fluide provenant de la sortie de fluide 20 soit vers un des deux dispositifs utilisateurs, soit vers le bac de drainage 52 selon que la température mesurée par le capteur 48 atteint ou non à la température de consigne pour le dispositif utilisateur considéré. A noter que le bac de drainage peut être remplacé par une boucle de recirculation retournant à l'entrée 10 du dispositif de chauffage. Une recirculation complique toutefois le dispositif car il peut nécessiter une pompe supplémentaire. De plus, la température de consigne est obtenue après quelques secondes seulement et la quantité d'eau rejetée est donc généralement faible.

Le dispositif fonctionne de la façon suivante:

Pour une boisson à extraire par le dispositif d'extraction 26, l'électrovanne "vapeur" 50b reste fermée. La pompe à eau 8 alimente le dispositif de chauffage qui fonctionne selon le principe déjà décrit. La température de l'eau est contrôlée en continue par le capteur de température 48. Tant que cette température est en dessous d'une température de consigne prédéterminée, le contrôleur 18 maintient l'électrovanne "de dérivation" 50a ouverte de façon à ce que l'eau sortant du dispositif de chauffage ne soit pas utilisée pour l'extraction mais soit drainée dans le bac de drainage ou recirculée. Une fois la température de consigne atteinte, le contrôleur commande la fermeture de la vanne 50a. Le fluide peut alors circuler jusqu'à forcer l'ouverture de la valve de contre-pression et alimenter le dispositif 26.

Lorsque la commande de vapeur est activée, comme pour préparer du lait moussé, le principe de montée en température est similaire. Au début du chauffage, la vanne 50b reste fermée et la vanne 50a est ouverte pour drainer ou recirculer le fluide (généralement de l'eau). Une fois la température de consigne de production de vapeur atteinte, la vanne 50a est fermée par le contrôleur et la vanne 50b est ouverte. La pression de vapeur étant trop faible pour ouvrir la valve de contre-pression 24, la vapeur alimente directement la sortie 56. Il faut noter qu'un capteur de température de sortie vers la sortie 20 du dispositif peut être utilisé pour le contrôle de la température au lieu d'un capteur de température intermédiaire.

Il va de soi que la présente invention n'est pas limitée aux modes de réalisation qui viennent d'être décrits et que diverses modifications et variantes simples peuvent être envisagées par l'homme du métier sans sortir du cadre de l'invention telle que définie par les revendications annexées. A titre d'exemple, le capteur intermédiaire 48 disposé entre la chambre 12b et 12c aux figures 1 et 2 pourrait également être disposé entre la chambre 12c et 12d, l'idée étant que le capteur de température intermédiaire soit disposé en aval d'une chambre comprenant un corps de chauffe et communiquant avec l'entrée de liquide et en amont d'une chambre comprenant un corps de chauffe et communiquant avec la sortie de liquide.

**Revendications**

1. Dispositif (1) de chauffage d'un fluide, en liquide chaud ou en vapeur pour la préparation de café ou autres boissons chaudes, comprenant un corps (13) muni d'un canal (12) pour la circulation d'un fluide, ledit canal ayant une entrée (10) de fluide et une sortie (20) de fluide et étant associé à au moins un corps de chauffe (14a, 14b, 14c, 14d) électrique dont l'alimentation est commandée par des moyens de commutation (16) reliés à des moyens de commande (18); ledit canal comprenant au moins des première et deuxième portions (12a, 12b, 12c, 12d) de canal reliées entre elles par une troisième portion de canal formant un conduit de liaison (32ab, 32bc, 32cd); lesdites au moins première et deuxième portions de canal (12a, 12b, 12c, 12d) étant associées chacune à au moins un corps de chauffe; le conduit de liaison étant associé à un capteur de température intermédiaire (48) relié audits moyens de commande; ledit capteur de température intermédiaire étant arrangé pour mesurer la température du fluide circulant dans ledit conduit, ledit dispositif étant **caractérisé en ce qu'**il comprend un débit-mètre (42) qui mesure la quantité de fluide traversant ledit canal et **en ce que** les moyens de commande et de commutation sont configurés pour commander le corps de chauffe de ladite au moins seconde portion de canal en fonction de la quantité d'énergie utile à apporter dans ladite seconde portion de canal pour amener le fluide à chauffer de la température intermédiaire mesurée par ledit capteur de température intermédiaire jusqu'à une température de consigne en sortie du dispositif; ladite quantité d'énergie étant calculée par le moyen de commande en fonction de la quantité de fluide mesurée par le débit-mètre, de la température intermédiaire mesurée et de la température de consigne en sortie du dispositif, et cette quantité d'énergie étant distribuée audit corps de chauffe de ladite au moins seconde portion de canal par les moyens de commande et de commutation à intervalles de temps déterminés.

2. Dispositif de chauffage d'un fluide selon la revendication 1, **caractérisé en ce que** les intervalles de temps déterminés sont inférieurs ou égaux à 500 millisecondes.

3. Dispositif de chauffage d'un fluide selon la revendication 1 ou 2, **caractérisé en ce que** les corps de chauffe sont immergés dans le fluide à chauffer.

4. Dispositif selon l'une des revendications 1 à 3, **caractérisé en ce qu'**il comprend en outre un capteur de température d'entrée (40) de fluide arrangé pour venir en contact direct avec le fluide à l'entrée du dispositif et un débitmètre disposé en amont de l'entrée de la première chambre.

5. Dispositif selon la revendication 4, **caractérisé en ce que** des moyens de régulation (16, 18) sont prévus pour calculer un facteur de correction de la puissance à affecter au corps de chauffe de ladite seconde portion de canal en fonction des températures d'entrée et intermédiaire mesurées.

6. Dispositif selon l'une quelconque des revendications 1 à 5, **caractérisé en ce que** chaque corps de chauffe comprend au moins une résistance, chaque résistance de chaque corps de chauffe étant commutable indépendamment.

7. Dispositif selon la revendication 6, **caractérisé en ce que** les corps de chauffe sont au nombre de deux et comprennent chacun deux résistances, chaque résistance des deux corps de chauffe étant agencée pour être commutée indépendamment l'une de l'autre par les moyens de commutation (16).

8. Dispositif selon la revendication 6, **caractérisé en ce que** les corps de chauffe sont au nombre de quatre, chacun étant logé dans une portion de canal séparée et chacun comprenant une résistance, chaque résistance étant agencée pour être commutée indépendamment par les moyens de commutation.

9. Dispositif selon la revendication 6, 7 ou 8, **caractérisé en ce que** chaque résistance développe une puissance nominale inférieure à la valeur de puissance théorique de scintillement du réseau et **en ce que** les résistances sont commutées dans une position marche-arrêt par les moyens de commutation de manière décalée pour éviter les écarts de puissance en valeur absolue supérieurs à la puissance nominale de chacune des résistances.

10. Dispositif selon la revendication 8, **caractérisé en ce que** chaque résistance développe une puissance électrique nominale inférieure à 450W.

11. Dispositif de chauffage d'un fluide selon l'une quelconque des revendications précédentes, **caractérisé en ce que** lesdites portions de canal associées respectivement à au moins un corps de chauffe forment chacune des chambres reliées entre elles par un conduit de liaison qui présente une section transversale inférieure à celle des chambres.

**12.** Dispositif de chauffage d'un fluide selon la revendication 11, **caractérisé en ce que** la surface extérieure des corps de chauffe et/ou la paroi intérieure de la chambre qui lui est associée présente un rainurage hélicoïdal.

**13.** Dispositif selon l'une des revendications 11 ou 12, **caractérisé en ce que** le corps comprend un bloc dans lequel sont ménagées lesdites chambres, **en ce que** lesdites chambres sont parallèles entre elles et débouchent de part et d'autre du bloc, **en ce qu'**elles sont reliées entre elles à une de leurs extrémités par un conduit de liaison et **en ce que** le corps comprend en outre deux couvercles qui recouvrent respectivement des premières et deuxièmes extrémités desdites chambres.

**14.** Dispositif selon la revendication 13, **caractérisé en ce que** le premier couvercle qui est associé à des premières extrémités desdites chambres porte les corps de chauffe (12a, 12b, 12c, 12d) et **en ce que** le deuxième couvercle qui est associé aux deuxièmes extrémités desdites chambres porte le capteur de température intermédiaire (48).

**15.** Dispositif selon la revendication 14, **caractérisé en ce que** les premier et deuxième couvercles délimitent avec le bloc le ou les conduits de liaison.

**16.** Dispositif selon la revendication 14, **caractérisé en ce que** le deuxième capteur et le débitmètre sont disposés dans un conduit ménagé dans le bloc et reliant l'entrée de fluide à l'entrée d'une première chambre.

**17.** Dispositif selon la revendication 13, **caractérisé en ce que** chaque corps de chauffe s'étend sur toute la longueur de la chambre à laquelle il et associé et **en ce qu'**il présente une forme complémentaire à celle de la chambre à laquelle elle est associée.

**18.** Dispositif selon l'une quelconque des revendications précédentes, **caractérisé en ce que** le capteur de température intermédiaire (48) est disposé en aval de la chambre communiquant avec l'entrée de fluide et en amont de la chambre communiquant avec la sortie de fluide.

**19.** Procédé pour chauffer rapidement et précisément un fluide pour la préparation de café ou autres boissons, à partir d'un dispositif de chauffage comprenant un corps muni d'un canal pour la circulation du fluide, d'au moins un premier corps de chauffe et d'au moins un second corps de chauffe, **caractérisé en ce que**

a) la quantité de fluide à chauffer est mesurée par un débitmètre (42),
b) la température intermédiaire est mesurée par un capteur de température intermédiaire (48) placé au contact direct ou indirect du fluide entre le premier et second corps de chauffe (12a, 12b, 12c, 12d),
c) la quantité d'énergie théorique à fournir par le second corps de chauffe est calculée par le moyen de commande en fonction de la quantité de fluide à chauffer mesurée, de la température intermédiaire mesurée, de la température de consigne en sortie du dispositif et de la capacité calorifique du fluide,
d) cette quantité d'énergie calculée est appliquée par le moyen de commutation, respectivement, aux second corps de chauffe, par commutation sélective des corps de chauffe, pour amener le fluide jusqu'à la (ou tout au moins au plus près de la) température de consigne désirée en sortie du dispositif,
e) au moins plusieurs des étapes a) à d) sont répétées par le moyen de commande à intervalles de temps déterminés.

**20.** Procédé pour chauffer rapidement et précisément un fluide selon la revendication 19, **caractérisé en ce qu'**au moins plusieurs des étapes a) à d) sont répétées à des intervalles de temps inférieurs ou égaux à 500 millisecondes.

**21.** Procédé selon la revendication 19 ou 20, **caractérisé en ce que** la quantité d'énergie distribuée à l'étape d) se fait à ou après chaque impulsion du débit-mètre pendant l'étape a).

**22.** Procédé selon la revendication 21, **caractérisé en ce que** l'intervalle pour le calcul de la quantité d'énergie à l'étape c) est d'environ 30 ms.

**23.** Procédé selon la revendication 19, pour chauffer rapidement et précisément un fluide notamment pour des applications ménagères et plus particulièrement pour la préparation de café ou autres boissons, à partir d'un dispositif de chauffage comprenant un corps muni d'un canal pour la circulation du fluide, d'au moins un premier corps de chauffe, d'au moins un second corps de chauffe, **caractérisé en ce que** :

f) la température du fluide à l'entrée du dispositif est mesurée par un capteur de température d'entrée du fluide placé au contact direct ou indirect du fluide,

g) la quantité de fluide à chauffer est mesurée par un débitmètre,

h) la quantité d'énergie théorique à fournir par le premier corps de chauffe est calculée par un moyen de commande en fonction de la quantité de fluide mesurée, de la température mesurée à l'entrée du dispositif, d'une température intermédiaire de consigne et de la capacité calorifique du fluide,

i) la température intermédiaire est mesurée par un capteur de température intermédiaire placé au contact direct ou indirect du fluide entre le premier et second corps de chauffe,

j) la quantité d'énergie théorique à fournir par le second corps de chauffe est calculée par le moyen de commande en fonction de la quantité de fluide à chauffer mesurée, de la température intermédiaire mesurée, de la température de consigne en sortie du dispositif et de la capacité calorifique du fluide,

k) ces quantités d'énergie calculées sont appliquées par le moyen de commutation, respectivement, aux premiers et second corps de chauffe, par commutation sélective des corps de chauffe, pour amener le fluide jusqu'à la (ou tout au moins au plus près de la) température de consigne désirée en sortie du dispositif,

l) au moins plusieurs des étapes f) à k) sont répétées par le moyen de commande à intervalles de temps déterminés.

24. Procédé pour chauffer rapidement et précisément un fluide selon la revendication 23, **caractérisé en ce qu'**au moins plusieurs des étapes f) à k) sont répétées à des intervalles de temps inférieurs ou égaux à 500 millisecondes.

25. Procédé selon la revendication 23 ou 24, **caractérisé en ce que** les quantités d'énergie distribuées à l'étape k) se fait à ou après chaque impulsion du débit-mètre pendant l'étape g).

26. Procédé selon la revendication 24, **caractérisé en ce que** l'intervalle pour les calculs des quantités d'énergie aux étapes h) et j) est d'environ 30 ms.

27. Procédé selon la revendication 24, 25 ou 26 **caractérisé en ce qu'** on calcule un facteur de correction selon la formule:

$$k = (\text{Température intermédiaire mesurée} - \text{Température d'entrée mesurée})/(\text{Température intermédiaire de consigne} - \text{Température d'entrée mesurée}),$$

on applique ce facteur de correction pour calculer la quantité d'énergie à fournir par le second corps de chauffe.

28. Dispositif de chauffage d'un fluide selon la revendication 1, **caractérisé en ce qu'**une sortie de fluide est reliée par un conduit à un dispositif utilisateur, et **en ce que** ledit dispositif de chauffage comprend en outre au moins une électrovanne (50a) raccordée audit conduit entre la sortie de fluide et ledit dispositif utilisateur et qui est commandée par lesdits moyens de commande (18), **en ce que** lesdits moyens de commande sont agencés pour commander l'électrovanne de façon à diriger le fluide provenant de la sortie de fluide vers un bac de drainage ou une boucle de recirculation lorsque la température mesurée par ledit capteur n'a pas encore atteint la température de consigne et vers le dispositif utilisateur lorsque la température mesurée a atteint la température de consigne.

29. Dispositif selon la revendication 28, **caractérisé en ce que** le dispositif utilisateur comprend une unité d'extraction d'une substance contenue dans une cartouche (26) et/ou une buse d'éjection de vapeur

30. Dispositif selon la revendication 28 ou 29, **caractérisé en ce que** le dispositif comprend en outre des moyens permettant d'engendrer une contre-pression disposés en aval du dispositif utilisateur et **en ce que** l'électrovanne (50a) est une vanne simple disposée sur une branche de dérivation du conduit .

31. Dispositif selon la revendication 28 ou 29, **caractérisé en ce que** l'électrovanne (50a) est une vanne à trois voies disposée sur le conduit, les trois voies étant respectivement raccordées à la sortie de fluide, au bac de drainage et au dispositif utilisateur.

**Claims**

1. Device (1) for heating a fluid so as to obtain a hot liquid or steam for the preparation of coffee or other hot beverages, comprising a body (13) provided with a channel (12) for circulating a fluid, said channel having a fluid entrance (10) and a fluid exit (20) and being connected to at least one electric heating element (14a, 14b, 14c, 14d) of which the supply is controlled by switching means (16) connected to control means (18); said channel comprising at least first and second channel portions (12a, 12b, 12c, 12d) connected to one another by a third channel portion forming a connecting conduit (32ab, 32bc, 32cd), said at least first and second channel portions (12a, 12b, 12c, 12d) each being connected to at least one heating element; the connecting conduit being connected to an intermediate temperature sensor (48) connected to said control means; said intermediate temperature sensor being arranged so as to measure the temperature of the fluid circulating inside said conduit, said device being **characterised in that** it comprises a flow meter (42) which measures the amount of fluid flowing through said channel, and **in that** the control and switching means are configured so as to control the heating element of said at least second channel portion as a function of the amount of energy that needs to be introduced into the said second channel portion in order to bring the fluid to be heated from the intermediate temperature measured by said intermediate temperature sensor to a set temperature at the exit of the device; said amount of energy being calculated by the control means as a function of the amount of energy measured by the flow meter, the intermediate temperature measured and the set temperature at the exit of the device, and said amount of energy being supplied to said heating element of said at least second channel portion via the control and switching means at predetermined time intervals.

2. Device for heating a fluid according to claim 1, **characterised in that** the predetermined time intervals are less than or equal to 500 milliseconds.

3. Device for heating a fluid according to either claim 1 or claim 2, **characterised in that** the heating elements are immersed in the fluid to be heated.

4. Device according to any one of claims 1 to 3, **characterised in that** it further comprises a fluid entrance temperature sensor (40) arranged so as to come into direct contact with the fluid at the entrance to the device and a flow meter arranged before the first chamber.

5. Device according to claim 4, **characterised in that** regulation means (16, 18) are provided to calculate a correction factor of the power to be allocated to the heating element of said second channel portion as a function of the entrance and intermediate temperatures measured.

6. Device according to any one of claims 1 to 5, **characterised in that** each heating element comprises at least one resistor, it being possible to switch each resistor of each heating element independently.

7. Device according to claim 6, **characterised in that** there are two heating elements which each comprise two resistors, each resistor of the two heating elements being arranged so as to be able to be switched independently of one another by the switching means (16).

8. Device according to claim 6, **characterised in that** there are four heating elements, each being arranged in a separate channel portion and each comprising a resistor, each resistor being arranged so as to be able to be switched independently by the switching means.

9. Device according to any one of claims 6, 7 or 8, **characterised in that** each resistor develops a rated power lower than the value of the theoretical scintillation power of the network, and **in that** the resistors are switched into an on-off position by the switching means in a staggered manner so as to avoid efficiency variations which are greater in absolute value than the rated power of each of the resistors.

10. Device according to claim 8, **characterised in that** each resistor develops rated electrical power lower than 450W.

11. Device for heating a fluid according to any one of the preceding claims, **characterised in that** said channel portions connected to at least one heating element respectively each form chambers connected to one another via a connecting conduit which has a transverse cross-section smaller than that of the chambers.

12. Device for heating a fluid according to claim 11, **characterised in that** the outer surface of the heating elements and/or the inner wall of the chamber which is connected thereto have/has spiral grooving.

13. Device according to either claim 11 or claim 12, **characterised in that** the body comprises a block, in which the said chambers are formed, and **in that** said chambers are parallel to one another and emerge on each side from the block, and **in that** they are connected to one another at one of their ends via a connecting conduit, and **in that** the body further comprises two covers which cover the first and second ends of said chambers respectively.

14. Device according to claim 13, **characterised in that** the first cover which is connected to the first ends of said chambers carries the heating elements (12a, 12b, 12c, 12d) and **in that** the second cover which is connected to the second ends of said chambers carries the intermediate temperature sensor (48).

15. Device according to claim 14, **characterised in that** the first and second covers together with the block delimit the connecting conduit(s).

16. Device according to claim 14, **characterised in that** the second sensor and the flow meter are arranged in a conduit which is formed in the block and connects the fluid entrance to the entrance of a first chamber.

17. Device according to claim 13, **characterised in that** each heating element extends over the entire length of the chamber to which it is connected, and **in that** it has a shape complementary to that of the chamber to which it is connected.

18. Device according to any one of the preceding claims, **characterised in that** the intermediate temperature sensor (48) is arranged after the chamber connected to the fluid entrance and before the chamber connected to the fluid exit.

19. Method for quickly and precisely heating a fluid for the preparation of coffee or other beverages using a heating device comprising a body provided with a channel for circulating fluid, at least a first heating element and at least a second heating element, **characterised in that**

   a) the amount of fluid to be heated is measured by a flow meter (42),
   b) the intermediate temperature is measured by an intermediate temperature sensor, (48) placed in direct or indirect contact with the fluid between the first and second heating elements (12a, 12b, 12c, 12d),
   c) the amount of theoretical energy to be provided by the second heating element is calculated by the control means as a function of the measured amount of fluid to be heated, the intermediate temperature measured, the set temperature at the exit of the device and the thermal capacity of the fluid,
   d) said calculated amount of energy is applied by the switching means to the second heating elements respectively by selectively switching the heating elements so as to bring the fluid to (or at the very least as close as possible to) the set temperature desired at the exit of the device,
   e) at least a plurality of steps a) to d) are repeated by the control means at predetermined time intervals.

20. Method for quickly and precisely heating a fluid according to claim 19, **characterised in that** at least a plurality of steps a) to d) are repeated at time intervals of less than or equal to 500 milliseconds.

21. Method according to either claim 19 or claim 20, **characterised in that** the amount of energy supplied in step d) is supplied during or after each pulse of the flow meter during step a).

22. Method according to claim 21, **characterised in that** the interval for calculating the amount of energy in step c) is approximately 30 ms.

23. Method according to claim 9 for quickly and precisely heating a fluid, in particular for domestic purposes and more particularly for the preparation of coffee or other beverages, using a heating device comprising a body provided with a channel for circulating fluid, at least a first heating element and at least a second heating element, **characterised in that**:

   f) the temperature of the fluid upon entering the device is measured by a fluid entrance temperature sensor placed in direct or indirect contact with the fluid,
   g) the amount of fluid to be heated is measured using a flow meter,
   h) the amount of theoretical energy to be provided by the first heating element is calculated by a control means as a function of the amount of fluid measured, the temperature measured at the entrance of the device, a set intermediate temperature and the thermal capacity of the fluid,
   i) the intermediate temperature is measured using an intermediate temperature sensor placed in direct or indirect contact with the fluid between the first and second heating elements,
   j) the amount of theoretical energy to be provided by the second heating element is calculated by the control means as a function of the measured amount of fluid to be heated, the intermediate temperature measured, the set temperature at the exit of the device and the thermal capacity of the fluid,

k) said calculated amounts of energy are applied by the switching means to the first and second heating elements respectively by selectively switching the heating elements so as to bring the fluid to (or at the very least as close as possible to) the set temperature desired at the exit of the device,

l) at least a plurality of steps f) to k) are repeated by the control means at set time intervals.

24. Method for quickly and precisely heating a fluid according to claim 23, **characterised in** at least a plurality of steps f) to k) are repeated at time intervals of less than or equal to 500 milliseconds.

25. Method according to either claim 23 or claim 24, **characterised in that** the amounts of energy supplied in step k) are supplied during or after each pulse of the flow meter during step g).

26. Method according claim 24, **characterised in that** the interval for calculating the amounts of energy in steps h) and j) is approximately 30 ms.

27. Method according any one of claims 24, 25 or 26, **characterised in that** a correction factor is calculated according to the formula:

$$k = (\text{intermediate temperature measured} - \text{entrance temperature measured})/(\text{set intermediate}$$

$$\text{temperature} - \text{entrance temperature measured}),$$

said correction factor is used in order to calculate the amount of energy to be provided by the second heating element.

28. Device for heating a fluid according to claim 1, **characterised in that** a fluid exit is connected via a conduit to a user device, and **in that** said heating device further comprises at least one solenoid valve (50a) connected to said conduit between the fluid exit and said user device and controlled by said control means (18), and **in that** said control means are arranged so as to control the solenoid valve in such a way that the fluid issuing from the fluid exit is directed towards a drainage tank or a recirculation loop if the temperature measured by said sensor has not yet reached the set temperature and towards the user device if the temperature measured has reached the set temperature.

29. Device according to claim 28, **characterised in that** the user device comprises a unit for extracting a substance contained in a cartridge 26 and/or a steam-ejecting nozzle.

30. Device according to either claim 28 or claim 29, **characterised in that** the device further comprises means for producing back pressure arranged after the user device, and **in that** the solenoid valve (50a) is a single valve arranged on a branch which diverts from the conduit.

31. Device according to either claim 28 or claim 29, **characterised in that** solenoid valve (50a) is a three-way valve arranged on the conduit, the three channels being connected to the fluid exit, the drainage tank and the user device respectively.

**Patentansprüche**

1. Vorrichtung (1) zum Erhitzen eines Fluids in Form von heißer Flüssigkeit oder Dampf für die Zubereitung von Kaffee oder anderen heißen Getränken, umfassend einen Körper (13), der mit einem Kanal (12) für den Umlauf eines Fluids versehen ist, der einen Fluideintritt (10) und einen Fluidaustritt (20) aufweist und dem mindestens ein elektrischer Heizkörper (14a, 14b, 14c, 14d) zugeordnet ist, dessen Versorgung durch Schaltmittel (16) gesteuert wird, die mit Steuermitteln (18) verbunden sind, wobei dieser Kanal mindestens einen ersten und einen zweiten Kanalabschnitt (12a, 12b, 12c, 12d) umfasst, die miteinander durch einen dritten, eine Verbindungsleitung bildenden Kanalabschnitt (32ab, 32bc, 32cd) verbunden sind, dem mindestens ersten und zweiten Kanalabschnitt (12a, 12b, 12c, 12d) jeweils mindestens ein Heizkörper zugeordnet ist, der Verbindungsleitung ein mit den Steuermitteln verbundener Mitteltemperaturfühler (48) zugeordnet ist, der Mitteltemperaturfühler ausgebildet ist, um die Temperatur des in dieser Leitung strömenden Fluids zu messen, wobei diese Vorrichtung **dadurch gekennzeichnet ist, dass** sie einen Durchsatzmesser (42) umfasst, der die den Kanal durchquerende Fluidmenge misst, und dass die Steuerund Schaltmittel ausgebildet sind, um den Heizkörper des mindestens zweiten Kanalabschnitts in Abhängigkeit von der Nutzenergiemenge zu steuern, die in dem zweiten Kanalabschnitt zuzuführen ist, um das zu erhitzende Fluid von der von dem Mitteltemperaturfühler gemessenen Mitteltemperatur auf eine Solltemperatur am Austritt der Vorrichtung zu bringen, wobei diese Energiemenge von den Steuermitteln in Abhängigkeit von der von dem Durchsatzmesser gemessenen Fluidmenge, der gemessenen Mitteltemperatur und der Solltemperatur am Austritt der Vorrichtung errechnet wird und diese Energiemenge durch die Steuerund Schaltmittel in bestimmten Zeitintervallen an den Heizkörper des mindestens zweiten Kanalabschnitts abgegeben wird.

2. Vorrichtung zum Erhitzen eines Fluids nach Anspruch 1, **dadurch gekennzeichnet, dass** die bestimmten Zeitintervalle kleiner als oder gleich 500 Millisekunden sind.

3. Vorrichtung zum Erhitzen eines Fluids nach Anspruch 1 oder 2, **dadurch gekennzeichnet, dass** die Heizkörper in das zu erhitzende Fluid eingetaucht sind.

4. Vorrichtung nach einem der Ansprüche 1 bis 3, **dadurch gekennzeichnet, dass** sie außerdem einen Fluideingangstemperaturfühler (40), der so angeordnet ist, dass er mit dem Fluid am Eintritt der Vorrichtung in direkten Kontakt kommt, und einen stromauf des Eintritts der ersten Kammer angeordneten Durchsatzmesser umfasst.

5. Vorrichtung nach Anspruch 4, **dadurch gekennzeichnet, dass** Regelmittel (16, 18) vorgesehen sind, um einen Faktor zur Korrektur der Leistung zu berechnen, die an den Heizkörper des zweiten Kanalabschnitts in Abhängigkeit von der gemessenen Eintrittstemperatur und der gemessenen Mitteltemperatur anzulegen ist.

6. Vorrichtung nach einem der Ansprüche 1 bis 5, **dadurch gekennzeichnet, dass** jeder Heizkörper mindestens einen Widerstand umfasst, wobei jeder Widerstand jedes Heizkörpers unabhängig schaltbar ist.

7. Vorrichtung nach Anspruch 6, **dadurch gekennzeichnet, dass** die Heizkörper in der Anzahl von zwei vorgesehen sind und jeweils zwei Widerstände umfassen, wobei jeder Heizwiderstand der beiden Heizkörper so ausgebildet ist, dass er durch die Schaltmittel (16) voneinander unabhängig geschaltet werden kann.

8. Vorrichtung nach Anspruch 6, **dadurch gekennzeichnet, dass** die Heizkörper in der Anzahl von vier vorgesehen sind, wobei jeder in einem getrennten Kanalabschnitt untergebracht ist und jeder einen Widerstand umfasst, wobei jeder Widerstand ausgebildet ist, um durch die Schaltmittel unabhängig geschaltet zu werden.

9. Vorrichtung nach Anspruch 6, 7 oder 8, **dadurch gekennzeichnet, dass** jeder Widerstand eine Nennleistung entwickelt, die niedriger als der theoretische Schwankungsleistungswert des Netzes ist, und dass die Widerstände in einer Stellung Ein-Aus durch die Schaltmittel versetzt geschaltet werden, um die Leistungsdifferenzen als absoluter Werten, die höher als die Nennleistung jedes der Widerstände sind, zu vermeiden.

10. Vorrichtung nach Anspruch 8, **dadurch gekennzeichnet, dass** jeder Widerstand eine elektrische Nennleistung kleiner als 450 W entwickelt.

11. Vorrichtung zum Erhitzen eines Fluids nach einem der vorhergehenden Ansprüche, **dadurch gekennzeichnet, dass** die dem mindestens einen Heizkörper zugeordneten Kanalabschnitte jeweils Klammern bilden, die durch eine Verbindungsleitung miteinander verbunden sind, die einen Querschnitt aufweist, der kleiner als derjenige der Kammern ist.

12. Vorrichtung zum Erhitzen eines Fluids nach Anspruch 11, **dadurch gekennzeichnet, dass** die Außenfläche der Heizkörper und/oder die Innenwand der ihr zugeordneten Kammer eine Schraubennutung aufweist.

13. Vorrichtung nach einem der Ansprüche 11 oder 12, **dadurch gekennzeichnet, dass** der Körper einen Block umfasst, in dem die Kammern vorgesehen sind, dass die Kammern zueinander parallel sind und zu beiden Seiten des Blocks ausmünden, dass sie miteinander an einem ihrer Enden durch eine Verbindungsleitung verbunden sind und dass der Körper außerdem zwei Deckel umfasst, die erste bzw. zweite Enden der Kammern abdecken.

14. Vorrichtung nach Anspruch 13, **dadurch gekennzeichnet, dass** der erste Deckel, der ersten Enden der Kammern zugeordnet ist, die Heizkörper (12a, 12b, 12c, 12d) trägt und dass der zweite Deckel, der den zweiten Enden der Kammern zugeordnet ist, den Mitteltemperaturfühler (48) trägt.

**15.** Vorrichtung nach Anspruch 14, **dadurch gekennzeichnet, dass** der erste und der zweite Deckel mit dem Block den oder die Verbindungsleitungen begrenzen.

**16.** Vorrichtung nach Anspruch 14, **dadurch gekennzeichnet, dass** der zweite Fühler und der Durchsatzmesser in einer Leitung angeordnet sind, die in dem Block vorgesehen ist und den Fluideintritt mit dem Eintritt einer ersten Kammer verbindet.

**17.** Vorrichtung nach Anspruch 13, **dadurch gekennzeichnet, dass** jeder Heizkörper sich über die ganze Länge der Kammer erstreckt, der er zugeordnet ist, und dass er eine Form besitzt, die zu derjenigen der Kammer, der er zugeordnet ist, komplementär ist.

**18.** Vorrichtung nach einem der vorhergehenden Ansprüche, **dadurch gekennzeichnet, dass** der Mitteltemperaturfühler (48) stromab der mit dem Fluideintritt verbundenen Kammer und stromauf der mit dem Fluidaustritt verbundenen Kammer angeordnet ist.

**19.** Verfahren zum schnellen und genauen Erhitzen eines Fluids für die Zubereitung von Kaffee oder anderen Getränken mit Hilfe einer Heizvorrichtung, die einen Körper umfasst, der mit einem Kanal für den Umlauf des Fluids, mit mindestens einem ersten Heizkörper und mindestens einen zweiten Heizkörper versehen ist, **dadurch** gekennzeichnet, dass

a) die zu erhitzende Fluidmenge durch einen Durchsatzmesser (42) gemessen wird,
b) die Mitteltemperatur durch einen Mitteltemperaturfühler (48) gemessen wird, der in direktem oder indirektem Kontakt mit dem Fluid zwischen dem ersten und dem zweiten Heizkörper (12a, 12b, 12c, 12d) angeordnet ist,
c) die theoretische Energiemenge, die von dem zweiten Heizkörper zu liefern ist, durch das Steuermittel in Abhängigkeit von der gemessenen zu erhitzenden Fluidmenge, von der gemessenen Mitteltemperatur, von der Solltemperatur am Austritt der Vorrichtung und von der Wärmekapazität des Fluids berechnet wird,
d) diese errechnete Energiemenge durch das Schaltmittel jeweilig an die zweiten Heizkörper durch selektive Schaltung der Heizkörper angelegt wird, um das Fluid auf die gewünschte Solltemperatur am Austritt der Vorrichtung (oder zumindest möglichst nahe zu dieser) zu bringen,
e) mindestens mehrere der Schritte a) bis d) durch das Steuermittel in bestimmten Zeitintervallen wiederholt werden.

**20.** Verfahren zum schnellen und genauen Erhitzen eines Fluids nach Anspruch 19, **dadurch gekennzeichnet, dass** mindestens mehrer der Schritte a) bis d) in Zeitintervallen wiederholt werden, die kleiner als oder gleich 500 Millisekunden sind.

**21.** Verfahren nach Anspruch 19 oder 20, **dadurch gekennzeichnet, dass** die im Schritt d) abgegebene Energiemenge bei oder nach jedem Impuls des Durchsatzmessers während des Schritts a) abgegeben wird.

**22.** Verfahren nach Anspruch 21, **dadurch gekennzeichnet, dass** das Intervall für die Berechnung der Energiemenge im Schritt c) etwa 30 ms beträgt.

**23.** Verfahren nach Anspruch 19 zum schnellen und genauen Erhitzen eines Fluids insbesondere für Haushaltsanwendungen und vor allem für die Zubereitung von Kaffee oder anderen Getränken mit Hilfe einer Heizvorrichtung, die einen Körper umfasst, der mit einem Kanal für den Umlauf des Fluids, mit mindestens einem ersten Heizkörper und mindestens einem zweiten Heizkörper versehen ist, **dadurch gekennzeichnet, dass**

f) die Temperatur des Fluids am Eintritt der Vorrichtung durch einen Fluideintrittstemperaturfühler gemessen wird, der in direktem oder indirektem Kontakt mit dem Fluid angeordnet ist,
g) die zu erhitzende Fluidmenge durch einen Durchsatzmesser gemessen wird,
h) die theoretische Energiemenge, die von dem ersten Heizkörper zu liefern ist, durch ein Steuermittel in Abhängigkeit von der gemessenen Fluidmenge, von der am Eintritt der Vorrichtung gemessenen Temperatur, von einer Sollmitteltemperatur und von der Wärmekapazität des Fluids errechnet wird,
i) die Mitteltemperatur durch einen Mitteltemperaturfühler gemessen wird, der in direktem oder indirektem Kontakt mit dem Fluid zwischen dem ersten und dem zweiten Heizkörper angeordnet ist,
j) die theoretische Energiemenge, die von dem zweiten Heizkörper zu liefern ist, durch das Steuermittel in Abhängigkeit von der gemessenen zu erhitzenden Fluidmenge, von der gemessenen Mitteltemperatur, von der Solltemperatur am Austritt der Vorrichtung und von der Wärmekapazität des Fluids berechnet wird,

17

k) diese errechneten Energiemengen durch das Schaltmittel jeweilig an die ersten und zweiten Heizkörper durch selektive Schaltung der Heizkörper angelegt werden, um das Fluid auf die gewünschte Solltemperatur am Austritt der Vorrichtung (oder zumindest möglichst nahe zu dieser Solltemperatur) zu bringen,

l) mindestens mehrere der Schritte f) bis k) durch das Steuermittel in bestimmten Zeitintervallen wiederholt werden.

**24.** Verfahren zum schnellen und genauen Erhitzen eines Fluids nach Anspruch 23, **dadurch gekennzeichnet, dass** mindestens mehrere der Schritte f) bis k) in Zeitintervallen wiederholt werden, die kleiner als oder gleich 500 Millisekunden sind.

**25.** Verfahren nach Anspruch 23 oder 24, **dadurch gekennzeichnet, dass** die im Schritt k) abgegebenen Energiemenge bei oder nach jedem Impuls des Durchsatzmessers während des Schritts g) abgegeben werden.

**26.** Verfahren nach Anspruch 24, **dadurch gekennzeichnet, dass** das Intervall für die Berechnungen der Energiemengen in den Schritt h) und j) etwa 30 ms beträgt.

**27.** Verfahren nach Anspruch 24, 25 oder 26, **dadurch gekennzeichnet, dass**
man einen Korrekturfaktor nach der Formel berechnet:

```
k = (gemessene Mitteltemperatur - gemessene Eintrittstempera-
tur) / ( Sollmitteltemperatur - gemessene Eintrittstempera-
tur),
```

man diesen Korrekturfaktor bei der Berechnung der von dem zweiten Heizkörper zu liefernden Energiemenge anlegt.

**28.** Vorrichtung zum Erhitzen eines Fluids nach Anspruch 1, **dadurch gekennzeichnet, dass** ein Fluidaustritt durch eine Leitung mit einer verbrauchenden Vorrichtung verbunden ist und dass dies Heizvorrichtung außerdem mindestens ein Magnetventil (50a) umfasst, das mit dieser Leitung zwischen dem Fluidaustritt und der verbrauchenden Vorrichtung verbunden ist und das durch die Steuermittel (18) gesteuert wird, und dass die Steuermittel ausgebildet sind, um das Magnetventil so zu steuern, dass das vom Fluidaustritt kommende Fluid zu einem Ablaufbehälter oder zu einer Rezirkulierungsschleife geleitet wird, wenn die von dem Fühler gemessene Temperatur die Solltemperatur noch nicht erreicht hat, und zu der verbrauchende Vorrichtung geleitet wird, wenn die gemessene Temperatur die Solltemperatur erreicht hat.

**29.** Vorrichtung nach Anspruch 28, **dadurch gekennzeichnet, dass** die verbrauchende Vorrichtung eine Einheit zum Extrahieren einer in einer Kartusche (26) enthaltenen Substanz und/oder eine Dampfausstoßdüse umfasst.

**30.** Vorrichtung nach Anspruch 28 oder 29, **dadurch gekennzeichnet, dass** die Vorrichtung außerdem stromab der verbrauchenden Vorrichtung angeordnete Mittel umfasst, die die Erzeugung eines Gegendrucks gestatten, und dass das Magnetventil (50a) ein Einfachventil ist, das in einer Zweigleitung der Leitung angeordnet ist.

**31.** Vorrichtung nach Anspruch 28 oder 29, **dadurch gekennzeichnet, dass** das Magnetventil (50a) ein in der Leitung angeordnetes Dreiwegeventil ist, wobei die drei Wege mit dem Fluidaustritt, mit dem Ablaufbehälter bzw. mit der verbrauchenden Vorrichtung verbunden sind.

EP 1 809 151 B1

Fig. 1

Fig. 2

Fig. 3

EP 1 809 151 B1

18  16

44a  44  14f  14e  36a  44a

38

20

42

12 { 12f
      12e }

13

30  22

26  24

28

46a

48  46  32ef

40

36

10

4

6

8

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1380243 A
- US 6246831 B
- US 10983671 B
- EP 512468 A